# FASCICULE DE BREVET EUROPEEN

(11) **EP 4 058 279 B1**
(45) Date de publication et mention de la délivrance du brevet: **06.09.2023**
(21) Numéro de dépôt: 20861978.3
(22) Date de dépôt: 12.11.2020
(51) Int. Cl.: B29D 30/06

(54) **MEMBRANE DE CUISSON POUR PNEUMATIQUE MUNIE D'UNE STRUCTURE DE DRAINAGE**
MIT EINER DRAINAGESTRUKTUR AUSGERÜSTETE REIFENHÄRTEMEMBRAN
TYRE-CURING MEMBRANE EQUIPPED WITH A DRAINAGE STRUCTURE

(30) Priorité: 14.11.2019 FR 1912720
(43) Date de publication de la demande: 21.09.2022
(73) Titulaire: Compagnie Générale des Etablissements Michelin, 63000 Clermont-Ferrand (FR)
(72) Inventeur: PIALOT, Frédéric, 63040 Clermont-Ferrand Cedex 09 (FR); MERINO LOPEZ, José, 63040 Clermont-Ferrand Cedex 09 (FR); FAUGERAS, Alain, 63040 Clermont-Ferrand Cedex 09 (FR)
(74) Mandataire: Redouté, Gilles Pierre
(86) Numéro de dépôt international: PCT/FR2020/052071
(87) Numéro de publication internationale: WO 2021/094689

(56) Documents cités:
- CN-A- 102 615 750
- JP-A- 2005 066 865
- JP-A- 2009 269 235

## Description

L'invention concerne le domaine de la fabrication des pneumatiques et, plus particulièrement, une membrane de cuisson pour pneumatique munie d'une structure de drainage, ainsi qu'un procédé de cuisson d'un pneumatique mettant en oeuvre une telle membrane.

Les pneumatiques sont habituellement obtenus par moulage et cuisson d'une ébauche de pneumatique à l'intérieur d'un moule de cuisson. Afin de mouler les motifs en relief des garnitures et des coquilles du moule sur l'ébauche, la surface externe de l'ébauche est plaquée contre la surface interne rigide du moule à l'aide d'une membrane de cuisson souple. Au début de la cuisson, la paroi flexible de la membrane est déployée à l'encontre de l'ébauche, par gonflage au moyen d'un fluide sous pression. Le fluide sous pression est également caloporteur, de sorte que l'ébauche est cuite par les calories transmises par le fluide au travers de la membrane. Afin de permettre l'évacuation du pneumatique à l'issue de sa cuisson, la membrane est ensuite repliée par vidage du fluide. A ces fins, la membrane de cuisson doit résister aux sollicitations mécaniques, en température, à l'usure et elle doit pouvoir se détacher facilement du pneumatique cuit.

Lors du déploiement de la membrane, de l'air est emprisonné, entre la surface interne de l'ébauche et la surface externe de la membrane, sous forme de poches. Les poches d'air peuvent provoquer des défauts sur la surface interne du pneumatique cuit. Ces défauts sont généralement des soufflures présentes sur la surface interne ou même dans la structure interne du pneumatique, ce qui mène à des défauts d'aspect, à la perte de performance du pneumatique, voire même à la décohésion des couches internes du pneumatique.

Afin de permettre l'évacuation des poches d'air, la membrane de cuisson est munie d'une structure de drainage qui comprend des canaux creusés sur la surface externe de la membrane. Les canaux s'étendent entre une zone de drainage de l'air, correspondant à l'aire de contact de la surface externe de la membrane avec la surface interne de l'ébauche, et une zone d'évacuation de l'air adjacente à la zone de drainage, correspondant à l'aire de contact de la surface externe de la membrane avec le moule de cuisson. Les zones de drainage puis d'évacuation, s'étendent du plan équatorial de la membrane, jusqu'aux talons de fixation en presse de cuisson de celle-ci. Généralement, ces canaux sont disposés hélicoïdalement, sur la surface externe de la membrane, et à intervalles réguliers.

Pour permettre une bonne évacuation de l'air, ces canaux doivent être assez profonds. Toutefois, la membrane doit avoir une épaisseur la plus fine possible afin de pouvoir transmettre les calories à l'ébauche. Or, il a été constaté que de telles rainures profondes affaiblissent la membrane et réduisent sa durée de vie.

On connait de la demande WO2019158852, au nom des demanderesses, une membrane comportant une structure de drainage de l'air. La structure de drainage comporte des premiers canaux de profondeur donnée destinés à drainer l'air. Ceux-ci délimitent des zones intermédiaires comportant des seconds canaux qui communiquent entre eux et avec au moins un premier canal. Les seconds canaux sont disposés avec une densité supérieure à celle des premiers, et sont de profondeur au moins deux fois inférieure à celle des premiers canaux. Une telle structure de drainage permet de limiter le recours à des canaux profonds tout en couvrant le plus densément possible la surface externe de la membrane de canaux.

Le document de brevet CN 102 615 750 A divulgue une membrane de cuisson présentant les caractéristiques du préambule de la revendication indépendante 1.

Toutefois, le drainage et l'évacuation de l'air ne se font pas de manière satisfaisante. De plus, lorsque la membrane de cuisson est plaquée contre la surface intérieure de l'ébauche de pneumatique, on observe que le film d'étanchéité, ou « gomme intérieure », qui tapisse ladite ébauche, pénètre dans les canaux et les obstrue progressivement, ce qui ralentie ou bloque le drainage de l'air, et provoque par ailleurs des défauts de moulage du pneumatique.

Un objectif de l'invention est de remédier aux inconvénients de l'état de la technique et de proposer une nouvelle membrane de cuisson permettant un drainage et une évacuation efficace de l'air, ainsi qu'une meilleure qualité de moulage du pneumatique obtenu.

Cet objectif est atteint par l'invention qui propose une membrane de cuisson pour pneumatique ayant une forme de révolution d'axe central et comprenant une paroi flexible en caoutchouc réticulé. La surface externe de ladite paroi comporte une zone de drainage de l'air destinée à venir en contact avec la surface interne d'une ébauche de pneumatique, et une zone d'évacuation de l'air adjacente à ladite zone de drainage. La membrane est munie d'une structure de drainage de l'air comprenant des éléments en creux sur ladite surface externe, lesdits éléments en creux formant un réseau de canaux s'étendant dans la zone de drainage, et jusqu'à la zone d'évacuation de l'air.

Selon l'invention, la profondeur d'un canal dudit réseau, définissant le chemin le plus court reliant un point quelconque dudit réseau, situé dans la zone de drainage de l'air, et la zone d'évacuation de l'air, est croissante le long dudit chemin.

L'air emprisonné entre la surface externe de la membrane et la surface interne de l'ébauche de pneumatique étant réparti en poches d'air dispersées sur toute la zone de drainage, un canal quelconque du réseau permet le drainage de plusieurs de ces poches d'air situées le long de son cheminement vers la zone d'évacuation. Du fait de la profondeur croissante du canal le long de son cheminement vers la zone d'évacuation, le canal est moins saturé en air, et toutes les poches d'air situées le long dudit cheminement sont drainées simultanément et avec une meilleure efficacité. Par ailleurs, le fait que le canal soit le plus court chemin reliant un point quelconque dudit réseau, situé dans la zone de drainage de l'air, et la zone d'évacuation de l'air, permet un drainage de l'air plus rapide. Ainsi, les poches les plus éloignées de la zone d'évacuation sont drainées plus rapidement qu'avec les membranes de l'état de la technique.

De plus, un canal plus profond s'obstruera plus lentement qu'un canal moins profond. Les poches les plus éloignés devant être drainées aussi vite que possible lors du déploiement de la membrane, les canaux drainant celles-ci restent dégagés plus longtemps.

Enfin, par voie de conséquence, les canaux les plus profonds sont généralement localisés à proximité de la zone d'évacuation. La zone d'évacuation est une zone peu sollicitée en striction lors du gonflage de la membrane, contrairement au reste de la membrane et, notamment, à sa partie équatoriale. Ainsi, le recours à des canaux profonds à proximité de la zone d'évacuation n'affaiblit pas la membrane et sa durée de vie est ainsi améliorée.

De préférence, les portions dudit chemin de profondeur constante ont une longueur inférieure ou égal à 20 fois la profondeur de la dite portion et, plus préférentiellement, à 10 fois la profondeur de la dite portion. L'augmentation progressive, de la profondeur des canaux, avec ou sans lien avec les confluences ou les croisillons formés par les canaux, permet d'optimiser le drainage de l'air sur toute la zone de drainage et d'éviter la saturation en air des canaux.

Encore plus préférentiellement, la profondeur du canal le long dudit chemin est strictement croissante.

Avantageusement, la largeur du canal définissant le chemin plus court reliant un point dudit réseau situé dans la zone de drainage de l'air, et la zone d'évacuation de l'air, est décroissante le long dudit chemin.

De préférence, les portions dudit chemin de largeur constante ont une longueur inférieure ou égale à 20 fois la largeur de la dite portion et, plus préférentiellement, à 10 fois la largeur de la dite portion. Ainsi, la largeur et la profondeur d'un canal, définissant le cheminement le plus court vers la zone d'évacuation, peuvent évoluer de telle manière que la section dudit canal augmente. La réduction progressive, de la largeur des canaux permet de ralentir leur obstruction par la gomme intérieure. Un tel arrangement permet d'éviter la saturation en air des canaux.

Encore plus préférentiellement, la largeur du canal le long dudit chemin est strictement décroissante.

Avantageusement, la distance minimale entre un point quelconque de ladite surface externe appartenant à la zone de drainage, et un canal est inférieure ou égale à 6 mm et, plus préférentiellement, à 4 mm. Une telle construction permet d'assurer une bonne couverture de la zone de drainage par le réseau de canaux, et un drainage de l'air plus efficace.

Selon une première variante de réalisation, les canaux comportent des dépouilles allant de 0° à 10° et, plus préférentiellement, de 0° à 5°, afin de faciliter le démoulage de la membrane lors de sa fabrication.

Selon une deuxième variante de réalisation, les canaux comportent des contre-dépouilles allant de -10° à 0° et, plus préférentiellement, de -5° à 0°, afin d'augmenter la section d'un canal tout en conservant une largeur réduite. Ainsi, la gomme intérieure de l'ébauche de pneumatique pénètre moins dans les canaux de la membrane, et l'augmentation de la section du canal favorise l'évacuation de l'air.

L'invention propose également un procédé de cuisson d'un pneumatique au cours duquel on déploie une membrane de cuisson selon l'invention, afin d'amener la surface externe de la paroi de ladite membrane en contact contre la surface intérieure d'une ébauche de pneumatique, et afin de presser la surface externe de ladite ébauche contre les parois d'un moule de cuisson de pneumatique.

Enfin, l'invention propose un pneumatique obtenu par un procédé de cuisson selon l'invention, ledit pneumatique présentant ainsi sur sa surface intérieure des nervures d'une hauteur égale ou supérieure à 0,05 mm, qui correspondent aux empreintes en négatif respectives des canaux.

L'invention sera mieux comprise grâce à la suite de la description, qui s'appuie sur les figures suivante :
- la figure 1 est une vue en coupe radiale de la moitié d'un moule de cuisson de pneumatique comportant une membrane selon l'invention ;
- la figure 2 est une vue en perspective d'un échantillon de la paroi de la membrane de la figure 1 selon un premier exemple de réalisation ;
- la figure 3 est une vue de dessus d'un échantillon de la paroi de la membrane de la figure 1 selon un deuxième exemple de réalisation ;
- la figure 4 est une vue en coupe longitudinale d'un canal de l'échantillon de la figure 3, selon un premier mode de réalisation ;
- la figure 5 est une vue en coupe longitudinale d'un canal de l'échantillon de la figure 3, selon un deuxième mode de réalisation ;
- la figure 6 est une vue en perspective d'un noyau de moule de cuisson pour membrane de cuisson.

Sur les différentes figures, les éléments identiques ou similaires portent la même référence. Leur description n'est donc pas systématiquement reprise.

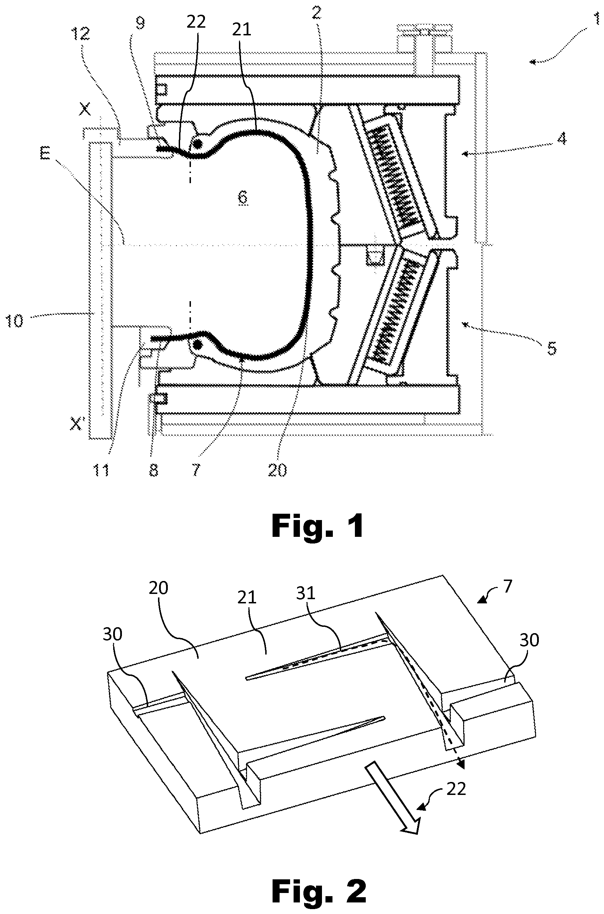

La figure 1 illustre de manière schématique la moitié d'un moule de cuisson 1 pour pneumatique, le moule étant illustré en position fermée, celle correspondant à l'opération de cuisson d'une ébauche de pneumatique 2. Le moule illustré à la figure 1 est du type en deux parties moulantes 4 et 5 venant en contact l'une avec l'autre au niveau du plan équatorial E de l'ébauche. Les parties moulantes comprennent, de manière connue, plusieurs pièces rigides définissant, en position fermée du moule, une cavité de moulage 6 ayant une forme de révolution autour de l'axe central X-X'. Les parois internes de la cavité sont réalisées de manière à définir, après moulage, la surface externe du pneumatique. Les parties moulantes 4 et 5 sont animées par des actionneurs prévus à cet effet pour fermer la cavité de moulage 6 avant de démarrer la cuisson de l'ébauche de pneumatique et l'ouvrir à la fin de la cuisson afin de pouvoir extraire le pneumatique cuit. Au centre du moule 1 est disposée une tige centrale 10 qui supporte deux plateaux 11, 12 en forme de disque agencés à distance axialement l'un de l'autre et dans lesquels est fixée par ses extrémités une membrane de cuisson 7. La membrane de cuisson 7 est fixée de manière étanche par ses extrémités ou talons 8, 9 aux plateaux 11, 12. Des orifices d'admission et d'évacuation du fluide caloporteur communiquent de manière étanche avec l'intérieur de la membrane, et sont prévus au niveau du plateau 11.

Dans ce qui suit, une direction axiale désigne une direction parallèle à l'axe X-X', une direction radiale désigne une direction perpendiculaire à l'axe X-X' et une direction circonférentielle désigne une direction perpendiculaire à une direction radiale.

La membrane de cuisson 7 est un corps creux élastique et expansible utilisé pour mouler et vulcaniser un pneumatique. La membrane de cuisson 7 comprend un corps tubulaire dont la surface externe 20 forme une partie utile délimitée par des parties d'extrémité formant les talons 8, 9 de la membrane.

On a illustré à la figure 2 une membrane de cuisson selon l'invention. La surface externe 20 de la membrane est divisée entre une zone de drainage de l'air 21 destinée à venir en contact avec la surface interne d'une ébauche de pneumatique, et une zone d'évacuation de l'air 22 adjacente à ladite zone de drainage, destinée à venir en contact avec une partie de la surface interne du moule de cuisson. La membrane est munie d'une structure de drainage de l'air comprenant des éléments en creux sur ladite surface externe, lesdits éléments en creux formant un réseau de canaux 30 s'étendant depuis la zone de drainage de l'air 21 jusqu'à la zone d'évacuation de l'air 22.

Par « réseau de canaux », on entend que les canaux 30 du réseau situés dans la zone de drainage 21 sont organisés et que chaque canal forme une jonction avec au moins un autre canal. A titre d'exemples, la zone de drainage peut comprendre un ou plusieurs réseaux de canaux indépendants ou, autrement dit, ne communiquant pas entre eux ; des canaux du réseau peuvent se croiser, former un maillage ou converger ; certains canaux du réseau peuvent être indépendants des autres canaux et, par conséquent, ne pas former de jonctions avec eux. Des canaux convergents cheminent depuis leurs extrémités située dans la zone de drainage jusqu'à la zone d'évacuation tout en formant des jonctions, telles des confluences, entre eux. Un réseau peut comprendre un ou plusieurs canaux qui définissent localement le chemin le plus court reliant un point quelconque dudit réseau, situé dans la zone de drainage de l'air 21, et la zone d'évacuation de l'air 22.

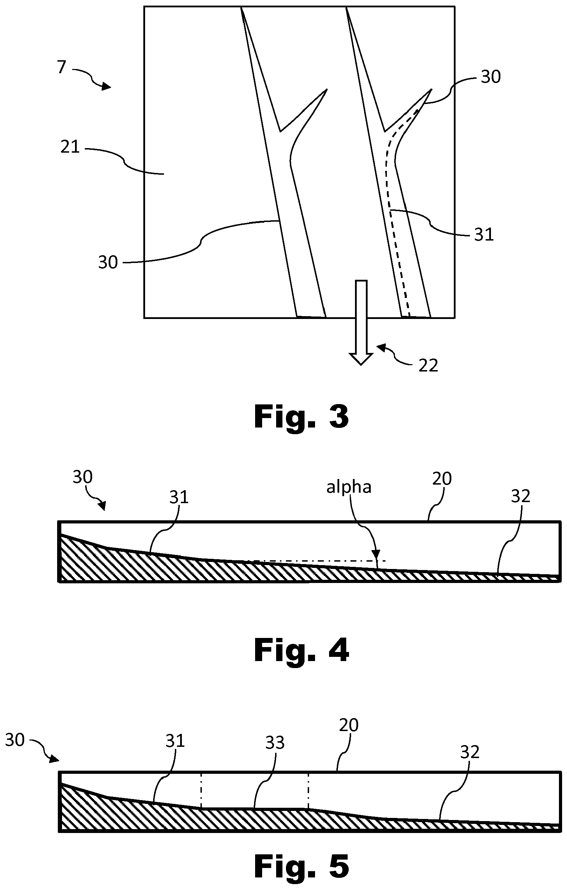

Selon l'invention, la profondeur d'un canal 30 du réseau, définissant le chemin le plus court 31 (figures 2 et 3) reliant un point quelconque dudit réseau, situé dans la zone de drainage de l'air 21, et la zone d'évacuation de l'air 22, est croissante le long dudit chemin.

Par « croissant », on entend que l'évolution du paramètre sous-jacent, à savoir la profondeur du canal, le long dudit chemin peut, à certains endroits, être nulle et, à d'autres endroits, être strictement croissante. Autrement dit, le long dudit chemin, la différence de profondeur entre un point plus éloigné de la zone d'évacuation et un point plus proche de la zone d'évacuation est supérieure ou égale à 0.

A titre d'exemple, un canal 30 a une profondeur et une largeur comprises entre 0,01 et 1 mm. La paroi 32 constituant le fond du canal, forme un angle alpha avec un plan parallèle à la surface externe 20 d'appui de la membrane (figure 4). Le long du cheminement le plus court 31, ledit angle est compris entre 0,01° et 20°, de préférence, entre 0,1° et 15° et, plus préférentiellement, entre 0,2° et 10°. Les paramètres dimensionnels des canaux sont mesurés à l'aide de moyens de métrologie, à partir d'un échantillon posé ou maintenu à plat de la membrane 7.

De préférence, les portions 33 dudit chemin 31 de profondeur constante ont une longueur inférieure ou égal à 20 fois la profondeur de la dite portion, plus préférentiellement, à 10 fois la profondeur de la dite portion (figure 5).

De préférence, la profondeur du canal le long dudit chemin 31 est strictement croissante (figure 4).

Avantageusement, la largeur du canal définissant le chemin plus court reliant un point dudit réseau situé dans la zone de drainage de l'air, et la zone d'évacuation de l'air, est décroissante le long dudit chemin (non représenté). A titre d'exemple, la largeur du canal, le long dudit chemin, peut également être croissante.

De préférence, les portions dudit chemin de largeur constante ont une longueur inférieure ou égale à 20 fois la largeur de la dite portion et, plus préférentiellement, à 10 fois la largeur de la dite portion.

De préférence, la largeur du canal le long dudit chemin est strictement décroissante.

Selon une première variante de réalisation, les canaux comportent une dépouille allant de 0° à 10° par rapport à une direction de démoulage perpendiculaire à la surface d'appui de la membrane, afin de faciliter le démoulage d'une membrane.

Alternativement, et selon une deuxième variante de réalisation, les canaux comportent des contre-dépouilles allant de -10° à 0° et, plus préférentiellement, de -5° à 0°, par rapport à ladite direction de démoulage, afin d'augmenter la section d'un canal tout en conservant une largeur réduite. Ainsi, la gomme intérieure de l'ébauche de pneumatique pénètre moins dans les canaux 30 de la membrane, et l'augmentation de la section du canal favorise l'évacuation de l'air.

De préférence, l'intersection de la surface externe 20 de la membrane 7 et un canal 30 est arrondie. De la même manière, la ou les intersections entre les différentes parois du canal sont arrondies.

De préférence, la distance minimale entre un point de la surface externe 20 de la membrane 7 appartenant à la zone de drainage 21, et un canal 30 est inférieure à 6 mm et, plus préférentiellement, à 4 mm.

Par ailleurs, la structure de drainage selon l'invention peut avantageusement être combinée à un revêtement antiadhésif, intégré à la surface externe de la membrane de cuisson et destiné à faciliter la séparation du pneumatique et de la membrane de cuisson après moulage. Une telle combinaison permet d'assurer l'évacuation de l'air pendant le moulage, et le décollement de la membrane après moulage, et ce y compris lorsque l'on renonce à employer un badigeon, c'est-à-dire une substance liquide additionnelle destinée à faciliter le démoulage et que l'on pulvérise usuellement sur la surface interne de l'ébauche de pneumatique avant le moulage.

En fonctionnement, l'ébauche de pneumatique 2 est introduite dans la cavité de moulage 6 et est centrée par rapport à l'axe X-X' du moule. Lorsqu'on injecte du fluide caloporteur sous pression à l'intérieur de la membrane de cuisson 7, en général de la vapeur d'eau ou de l'air mélangé avec de l'azote, elle se déploie et prend une forme générale toroïdale à l'intérieur de l'enveloppe de pneumatique. Lorsqu'elle se déploie sous l'effet de la pression du fluide caloporteur, sa paroi flexible s'étend jusqu'à plaquer l'enveloppe crue contre les parois rigides du moule de cuisson. Lors de cette phase, la membrane doit évacuer l'air inclus dans le pneumatique lors de sa confection. La surface de la membrane présente dans ce but une structure de drainage formant un réseau de canaux 30 s'étendant depuis la zone de drainage de l'air 21 jusqu'à la zone d'évacuation de l'air 22.

Pour fabriquer une membrane 7 on utilise, de manière généralement connue, une presse de vulcanisation comportant un noyau et deux coquilles rigides, métalliques, la membrane étant constituée par le manchon obtenu par un moulage de compression d'un bloc de caoutchouc butyle inséré entre les coquilles et le noyau. Le motif de la surface externe de la partie utile de la membrane est imprimé sur le noyau qui est une pièce convexe, plus facile à usiner que les coquilles qui sont des pièces concaves. La membrane est donc vulcanisée à l'envers, la structure en relief étant située à l'intérieur de la membrane lors de sa fabrication. Après vulcanisation, on extrait la membrane et on la retourne, comme une chaussette, de manière à ramener sa structure en relief à l'extérieur de la membrane.

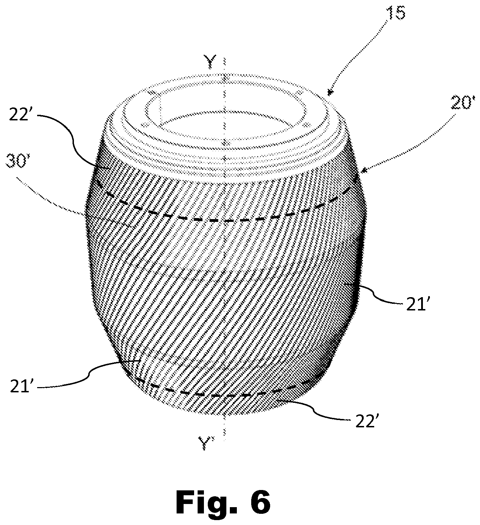

La figure 6 illustre un exemple de noyau 15 utilisé dans un moule de vulcanisation d'une membrane de cuisson 7 de l'invention. Le noyau 15 a une forme de révolution autour d'un axe Y-Y', axe qui coïncide avec celui de l'ébauche de pneumatique lorsque la membrane et l'ébauche sont agencées dans le moule de cuisson 1.

Le noyau 15 a une forme ovoïdale, plus particulièrement il comporte trois parties de longueur axiale sensiblement égale dont deux parties frontales en tronc de cône réunies par une partie centrale cylindrique. La surface externe 20' du noyau 15 constitue le négatif de la partie utile 20 de la membrane de cuisson 7 et comporte dans ce but des cannelures 30' uniformément réparties sur la surface externe 20' du noyau permettant la moulure de nervures correspondantes dans la membrane de cuisson 7. La surface externe 20' du noyau comporte une première zone 21' correspondant à la zone de drainage de l'air 21, et une deuxième zone 22' correspondant à la zone d'évacuation de l'air 22.

Lors de la fabrication de la membrane, le noyau moule les nervures sur sa partie interne, la membrane est ensuite retournée pour être déposée dans le moule de cuisson. Deux nervures adjacentes de la membrane définissent entre elles un canal 30, plusieurs canaux 30 étant ainsi uniformément reparties sur la surface externe de la membrane. Les cannelures 30' sont orientées de manière à ce que les canaux de la membrane drainent l'air à partir du sommet de l'ébauche de pneumatique en direction des bourrelets de celle-ci. Les cannelures 30' sont généralement inclinées par rapport à une ligne méridienne du noyau de la membrane, mais peuvent aussi être parallèles à celle-ci. Dans l'exemple illustré à la figure 2, les cannelures 30' sont parallèles entre elles, elles forment un angle d'environ 30° avec la ligne méridienne du noyau, chaque cannelure part d'une première position circonférentielle du noyau à l'une de ses extrémités qui forme l'un des talons de la membrane et arrive dans une deuxième position circonférentielle du noyau à l'extrémité opposée.

D'autres variantes et modes de réalisation de l'invention peuvent être envisagés sans sortir du cadre de ses revendications.

Ainsi, selon une variante de réalisation de l'invention (non illustrée), un réseau de canaux comprend des premiers canaux délimitant une zone intermédiaire, et des seconds canaux creusés sur la zone intermédiaire. La profondeur d'un canal définissant le chemin le plus court reliant un point de la zone intermédiaire à un premier canal est croissante le long dudit chemin.

## Revendications

1. Membrane de cuisson (7) pour pneumatique ayant une forme de révolution d'axe central et comprenant une paroi flexible en caoutchouc réticulé,
la surface externe (20) de ladite paroi comportant une zone de drainage de l'air (21) destinée à venir en contact avec la surface interne d'une ébauche de pneumatique (2), et une zone d'évacuation de l'air (22) adjacente à ladite zone de drainage,
la membrane (7) étant munie d'une structure de drainage de l'air comprenant des éléments en creux sur ladite surface externe, lesdits éléments en creux formant un réseau de canaux (30) s'étendant dans la zone de drainage de l'air (21), et jusqu'à la zone d'évacuation de l'air (22),
**caractérisé en ce que** la profondeur d'un canal (30) dudit réseau, définissant le chemin plus court (31) reliant un point quelconque dudit réseau de canaux, situé dans la zone de drainage de l'air (21), et la zone d'évacuation de l'air (22), est croissante le long dudit chemin.

2. Membrane selon la revendication 1 dans laquelle les portions (33) dudit chemin (31) de profondeur constante ont une longueur inférieure ou égale à 20 fois la profondeur de la dite portion, de préférence, à 10 fois la profondeur de ladite portion.

3. Membrane selon la revendication 1 dans laquelle la profondeur du canal (30) le long dudit chemin (31) est strictement croissante.

4. Membrane selon l'une des revendications 1 à 3 dans laquelle, la largeur du canal (30) définissant le chemin plus court (31) reliant un point dudit réseau, situé dans la zone de drainage de l'air (21), et la zone d'évacuation de l'air (22), est décroissante le long dudit chemin.

5. Membrane selon la revendication 4 dans laquelle les portions dudit chemin (31) de largeur constante ont une longueur inférieure ou égale à 20 fois la largeur de ladite portion, de préférence, à 10 fois la largeur de ladite portion.

6. Membrane selon la revendication 4 dans laquelle la largeur du canal (30) le long dudit chemin (31) est strictement décroissante.

7. Membrane selon l'une des revendications 1 à 6 dans laquelle la distance minimale entre un point quelconque de ladite surface externe (20) appartenant à la zone de drainage (21), et un canal (30) est inférieure ou égale à 6 mm et, plus préférentiellement, à 4 mm.

8. Membrane selon l'une des revendications 1 à 7 dans laquelle les canaux (30) comportent des contre-dépouilles allant de -10° à 0° et, plus préférentiellement, de -5° à 0°.

9. Membrane selon l'une des revendications 1 à 7 dans laquelle les canaux (30) comportent des dépouilles allant de 0° à 10° et, plus préférentiellement, de 0° à 5°.

10. Procédé de cuisson d'un pneumatique au cours duquel on déploie une membrane de cuisson (7) selon l'une des revendications 1 à 9, afin d'amener la surface externe (20) de ladite paroi en contact contre la surface intérieure d'une ébauche de pneumatique (2), et afin de presser la surface externe de ladite ébauche contre les parois d'un moule de cuisson de pneumatiques (1).

11. Pneumatique obtenu par un procédé de cuisson selon la revendication 10, ledit pneumatique présentant ainsi sur sa surface intérieure des nervures d'une hauteur égale ou supérieure à 0,05 mm, qui correspondent aux empreintes en négatif respectives des canaux (30).

## Patentansprüche

1. Aushärtemembran (7) für einen Reifen, die eine Rotationsform um eine zentrale Achse hat und eine flexible Wand aus vernetztem Kautschuk aufweist,
wobei die Außenfläche (20) der Wand einen Luftdrainagebereich (21), der dazu bestimmt ist, mit der Innenfläche eines Reifenrohlings (2) in Kontakt zu kommen, und einen an den Drainagebereich angrenzenden Luftauslassbereich (22) aufweist,
wobei die Membran (7) mit einer Luftdrainagestruktur versehen ist, die Vertiefungselemente an der Außenfläche umfasst, wobei die Vertiefungselemente ein Netz von Kanälen (30) bilden, die sich im Luftdrainagebereich (21) und bis zum Luftauslassbereich (22) erstrecken,
**dadurch gekennzeichnet, dass** die Tiefe eines Kanals (30) des Netzes, der den kürzesten Weg (31) definiert, der einen beliebigen Punkt des Netzes von Kanälen, der sich im Luftdrainagebereich (21) befindet, und den Luftauslassbereich (22) verbindet, entlang des Wegs zunimmt.

2. Membran nach Anspruch 1, wobei die Abschnitte (33) des Wegs (31) mit konstanter Tiefe eine Länge aufweisen, die kleiner als oder gleich dem 20-fachen der Tiefe des Abschnitts, vorzugsweise dem 10-fachen der Tiefe des Abschnitts, ist.

3. Membran nach Anspruch 1, wobei die Tiefe des Kanals (30) entlang des Weges (31) streng zunehmend ist.

4. Membran nach einem der Ansprüche 1 bis 3, wobei die Breite des Kanals (30), der den kürzesten Weg (31) definiert, der einen Punkt des Netzes, der sich im Luftdrainagebereich (21) befindet, und den Luftauslassbereich (22) verbindet, entlang des Wegs abnimmt.

5. Membran nach Anspruch 4, wobei die Abschnitte des Wegs (31) mit konstanter Breite eine Länge aufweisen, die kleiner als oder gleich dem 20-fachen der Breite des Abschnitts, vorzugsweise dem 10-fachen der Breite des Abschnitts, ist.

6. Membran nach Anspruch 4, wobei die Breite des Kanals (30) entlang des Wegs (31) streng abnehmend ist.

7. Membran nach einem der Ansprüche 1 bis 6, wobei der Mindestabstand zwischen einem beliebigen Punkt der Außenfläche (20), der zum Drainagebereich (21) gehört, und einem Kanal (30) 6 mm oder weniger und bevorzugter 4 mm oder weniger beträgt.

8. Membran nach einem der Ansprüche 1 bis 7, wobei die Kanäle (30) Unterschneidungen von -10° bis 0° und bevorzugter von -5° bis 0° aufweisen.

9. Membran nach einem der Ansprüche 1 bis 7, wobei die Kanäle (30) Formschrägen von 0° bis 10° und bevorzugter von 0° bis 5° aufweisen.

10. Verfahren zum Aushärten eines Reifens, bei dem eine Aushärtemembran (7) nach einem der Ansprüche 1 bis 9 ausgebreitet wird, um die Außenfläche (20) der Wand mit der Innenfläche eines Reifenrohlings (2) in Kontakt zu bringen und um die Außenfläche des Rohlings gegen die Wände einer Reifenaushärteform (1) zu pressen.

11. Reifen, der durch ein Aushärtungsverfahren nach Anspruch 10 erhalten wird, wobei der Reifen dadurch an seiner Innenfläche Rippen mit einer Höhe von 0,05 mm oder mehr aufweist, die den jeweiligen Negativabdrücken der Kanäle (30) entsprechen.

## Claims

1. Curing bladder (7) for a tyre having a shape exhibiting symmetry of revolution with a central axis and comprising a flexible wall made of cross-linked rubber,
the external surface (20) of said wall comprising an air drainage zone (21) intended to come into contact with the internal surface of a green tyre (2), and an air removal zone (22) adjacent to said drainage zone,
the bladder (7) being equipped with an air drainage structure comprising elements recessed into said external surface, said recessed elements forming a network of channels (30) extending in the air drainage zone (21) and as far as the air removal zone (22), **characterized in that** the depth of a channel (30) of said network, defining the shortest path (31) connecting any point of said network of channels, which is situated in the air drainage zone (21), and the air removal zone (22), increases along the length of said path.

2. Bladder according to Claim 1, in which the constant-depth portions (33) of said path (31) have a length less than or equal to 20 times the depth of said portion, preferably less than or equal to 10 times the depth of said portion.

3. Bladder according to Claim 1, in which the depth of the channel (30) along said path (31) is a strictly increasing depth.

4. Bladder according to one of Claims 1 to 3, in which the width of the channel (30) defining the shortest path (31) connecting a point of said network, which is situated in the air drainage zone (20), and the air removal zone (22), decreases along the length of said path.

5. Bladder according to Claim 4, in which the constant-width portions of said path (31) have a length less than or equal to 20 times the width of said portion, preferably less than or equal to 10 times the width of said portion.

6. Bladder according to Claim 4, in which the width of the channel (30) along said path (31) is a strictly decreasing width.

7. Bladder according to one of Claims 1 to 6, in which the minimum distance between any point on said external surface (20) belonging to the drainage zone (21) and a channel (30) is less than or equal to 6 mm, and preferably less than or equal to 4 mm.

8. Bladder according to one of Claims 1 to 7, in which the channels (30) have back-draft angles ranging from -10° to 0° and, more preferably, from - 5° to 0°.

9. Bladder according to one of Claims 1 to 7, in which the channels (30) have draft angles ranging from 0° to 10° and, more preferably, from 0° to 5°.

10. Method for curing a tyre, during which a curing bladder (7) according to one of Claims 1 to 9 is deployed in order to bring the external surface (20) of said wall into contact against the interior surface of a green tyre (2) and in order to press the external surface of said green tyre against the walls of a tyre curing mould (1).

11. Tyre obtained by a curing method according to Claim 10, said tyre thus having on its interior surface ribs of a height equal to or greater than 0.05 mm, which correspond to the respective impressions, in negative, of the channels (30).
